# EUROPEAN PATENT SPECIFICATION

(11) **EP 4 601 514 B1**
(45) Date of publication and mention of the grant of the patent: **18.02.2026**
(21) Application number: 23786073.9
(22) Date of filing: 09.10.2023
(51) Int. Cl.: A47J 31/36

(54) **BEVERAGE POD SYSTEM**
GETRÄNKEKAPSELSYSTEM
SYSTÈME DE DOSETTE DE BOISSON

(30) Priority: 14.10.2022 EP 22201512
(43) Date of publication of application: 20.08.2025
(73) Proprietor: Société des Produits Nestlé S.A., 1800 Vevey (CH)
(72) Inventor: CAMIER, Nicolas, 69530 Brignais (FR); KOLLEP, Alexandre, 1095 Lutry (CH); VUAGNIAUX, Didier, 1188 Gimel (CH)
(74) Representative: Pasquino, Fabio
(86) International application number: PCT/EP2023/077819
(87) International publication number: WO 2024/079013

(56) References cited:
- EP-B1- 2 908 706
- WO-A1-2020/089404
- WO-A2-2020/114995
- IT-A1- UB20 160 700
- US-A1- 2015 289 706
- US-A1- 2016 150 907

## Description

### Field of the invention

The present invention relates to the field of preparation of beverages with a system including a single-serve container comprising a beverage ingredient and a machine that has an extraction chamber in which the container can be inserted, extracted and from which it can be removed.

### Background of the invention

Single serve containers for the automatic preparation of beverages encompass various formats of containers that can be extracted according to different types of systems. In these systems, the container introduced by the user inside the system becomes enclosed in a chamber to perform the extraction process and then is removed from the chamber. The chamber comprises two parts configured to be moved apart during the introduction of the container and then moved one to the other to form the extraction chamber around the container for the beverage extraction. Generally, a first upstream part of the chamber comprises piercing means configured to pierce a wall of the container and injection means configured to introduce water through the pierced wall in order to prepare the beverage, and a second downstream part of the chamber comprises opening means configured to open another wall of the container in order to dispense the prepared beverage.

With the requirement of using more sustainable single-portioned containers, it is now proposed containers made of compostable materials such as paper for use in such systems. For example, it is proposed in WO 2020/114995 to use containers essentially made of paper. To enable the forming of the cup-shaped body of these containers, the used paper material is rather thick, and accordingly the thickness of the side walls and the bottom wall of the cup-shaped body present the same high thickness. Due to this high thickness, the piercing of the bottom wall during the beverage preparation requires a strong force from the piercing means of the chamber and the current systems are not adapted for.

In addition, it is desired to provide systems that are able to receive and extract containers of different sizes such as in WO 2020/089404. In such a machine, the two parts of the chamber can be moved one to the other to enclose the container by a motor. Whatever the size of the container, the thick bottom wall of the container must be pierced correctly by the piercing means of the chamber.

WO 2017/137933 describes a system wherein containers of different heights can be used in the chamber because the piercing means of the upstream part of the chamber is mounted on a spring. By means of this spring, the size of the chamber can be adapted to the height of the cup-shaped body of the container. Yet, in order to enable piercing of the bottom wall with such a spring-loaded piercing means, the bottom wall of the container must be sufficiently thin to be torn. For this reason, it is not possible to extract usual containers made of the same material at the bottom wall as along the side wall : within this system, it is necessary to use containers with a bottom wall thinner than the side walls. Such a solution cannot be used with containers made of thick paper material at the bottom wall.

EP2908706B1 describes an extraction unit for extracting cartridges of two different heights comprising a cartridge receiving seat which is delimited by a first part and a second part that are relatively movable between a cartridge extraction position and a cartridge loading and/or ejection position. The first delimiting part has a locking device which is configured to lock the first and second cavity parts into at least one of the first and second cavity positions when the first and second delimiting parts are in the cartridge loading and/or ejection position or close thereto. Anyway, the document does not provide any hint to avoid the presence of a headspace in the extracting position.

An object of the invention is to address at least the above existing problems.

These problems are solved by the objects of Claims 1 to 14.

### Summary of the invention

In a first aspect of the invention, there is provided an extraction device for extracting a beverage ingredient by supplying an extraction liquid into a pod, said extraction device comprising :
- upstream and downstream pod enclosing part, wherein the upstream pod enclosing part is translatable along a horizontal longitudinal axis (XX') between an open position for inserting and removing the pod and a closed position for forming an extraction chamber enclosing the pod during extraction,
- the upstream part defining a cage and comprising piercing elements for piercing the bottom wall of the pod and liquid outlet openings,
- the downstream part comprising a plate transverse to the longitudinal axis (XX'), said plate comprising a downstream piercing arrangement for opening the lid of the pod,
- a pod holder configured to hold the pod between the upstream and downstream pod enclosing parts when these parts are in the opened position, said pod holder being configured to hold the lid of the pod in front of the downstream plane piercing arrangement, and

wherein, in the upstream pod enclosing part, the cage comprises :
   - a side wall extending between an opened front end and a back end along a cage longitudinal axis, said side wall being translatable between the open position and the closed position, and
   - an end wall transverse to said longitudinal axis of the cage, said end wall presenting a front face, said front face bearing the piercing elements and the liquid outlet openings,
wherein said end wall is movable longitudinally inside the side wall of the cage of said upstream pod enclosing part,
wherein the side wall and the end wall are actuated by one common motor and a common actuator, said common actuator being connected to the side wall and to the end wall so that, when the upstream pod enclosing part is translated from the open position to the closed position :
   - first, the side wall is translated from the open to the closed position to form the a fully closed extraction chamber around the pod, and
   - then, the end wall is moved inside the side wall from a backward position up to a frontward position to pierce the bottom wall of the pod.

The extraction device is adapted to the extraction of a pod, which usually comprises :
- a pod body comprising a side wall and a bottom wall defining a chamber, said chamber extending axially between the bottom and a top opening, and
- a top lid closing the top opening of the pod body.

The extraction device of the system is typically comprised in a beverage preparation machine configured for receiving pods. Preferably it is a coffee machine, though the machine can be designed to prepare tea, chocolate or soup for instance, depending on the ingredient enclosed in the pod. In particular, the machine is arranged for preparing within the extraction chamber a beverage by passing water or another liquid through a pod containing an ingredient of the beverage to be prepared, preferably roasted ground coffee, or eventually tea leaves or instant coffee or instant tea or chocolate or cacao or milk powder or dehydrated soup. In the preferred embodiment, the beverage ingredient is roasted and ground coffee.

The device is configured for extracting a beverage ingredient contained in a pod by supplying an extraction liquid such as water into the pod. The device comprises upstream and downstream pod enclosing parts relatively movable between an open position for inserting and/or ejecting such pod and a closed position for forming an extraction chamber enclosing the pod during beverage ingredient extraction.

Typically, the pod can be inserted into the extraction device from above under the effect of gravity. Ejection or removal of the pod upon reopening of the enclosing parts may also be driven by gravity.

The extraction device comprises upstream and downstream pod enclosing parts wherein at least the upstream pod enclosing part is movable, preferably translatable, along a horizontal longitudinal axis (XX') between an open position for inserting and removing the pod and a closed position for forming an extraction chamber enclosing the pod during extraction.

The downstream part or dispensing part defines a downstream piercing arrangement for opening the lid wall of the pod when the extracting liquid is introduced inside the pod. Usually, this downstream plane piercing arrangement is designed for opening the lid by relative engagement with said lid under the effect of the rise in pressure of the injected liquid in the chamber of the pod and inflation of the lid against the piercing arrangement. In the preferred embodiment, this downstream plane piercing arrangement comprises a plate, that is preferably rigid, and that comprises opening elements like a plurality of relief and recessed elements such as spikes, that can present the shape of cones or pyramids on its surface turned to the second wall.

In addition, the plate comprises traversing holes to evacuate the beverage dispensed from the opened lid to a tube or nozzle collecting and dispensing beverage in a drinking cup.

The upstream part or injecting part comprises an upstream piercing arrangement in the form of one or more piercers for piercing the bottom wall of the pod body of the inserted pod and at least one liquid injector for supplying liquid through the pierced first wall of the pod.

This upstream piercing arrangement can comprise piercers in the form of blades. These blades ca be designed and positioned to pierce the bottom wall of the pod body when the upstream and downstream pod enclosing parts are brought to the closed position. The liquid injector, such as a shower at the upstream part of the cage, can introduce the extracting liquid through the pre-pierced openings.

In an alternative, this upstream piercing arrangement can comprise at least one hollow needle configured to pierce the wall of the bottom of the pod body and the hollow needle(s) can comprise an internal axial channel for guiding the extraction liquid in the chamber of the pod.

Usually, the shapes of the upstream and enclosing parts of the extraction device are defined according to the shape of the pod configured to be extracted therefrom.

Generally, the extracting device can comprise an insertion section for inserting the pod in the device. Generally, this section is positioned above the upstream and downstream pod enclosing parts so that the pod is inserted by gravity between these two parts. Depending on the shape of the pod, this insertion section can be designed so that the user is urged to position the pod with its lid facing the downstream piercing arrangement.

The extraction device comprises a pod holder configured to hold the pod between the upstream and downstream pod enclosing parts when these parts are in the opened position. This holder is configured to hold the lid of the pod in front of the downstream plane piercing arrangement.

Such a pod holder can be retracted and can make the pod free in order to be enclosed by the two enclosing parts when these parts are in the closed position. For example, WO 2005/004683 or WO 2007/134960 illustrate such types of pod holders.

In the upstream pod enclosing part, the cage comprises a side wall extending between an opened front end and a back end along a cage longitudinal axis, said side wall being movable between the open position and the closed position. Generally, the length of this side wall is greater than the biggest height of all the different pods that can be used in the extraction device.

The cage comprises an end wall transverse to said longitudinal axis of the cage. This end wall presents a front face and this front face bears the piercing elements and the liquid outlet openings. This end wall is movable inside the side wall. As a result, this end wall is able to adjust the internal volume of the cage with different sizes of pods.

Preferably, the end wall is not attached to other elements of the extraction device and is freely movable inside the side wall under the force of other elements such as the pod or the nut device as described below.

The piercing elements of the upstream pod enclosing part rise from the surface of the front face by a piercing height.

The side wall and the end wall are actuated by a common actuator that is connected to the side wall and to the end wall. The connection can be direct or indirect, for example the actuator can be connected to a carrier of the side wall to which the side wall is fixedly attached.

The common actuator is connected to the side wall and to the end wall so that, when the upstream pod enclosing part is translated from the open position to the closed position :
- first, the side wall is translated by the actuator from the open to the closed position to form the extraction chamber around the pod, and,
- once this extraction chamber is formed around the pod, then only, the end wall is moved by the actuator inside the side wall from a backward position up to a frontward position to pierce the bottom wall of the pod.

Consequently, the same actuator enables two different operations :
- the actuator enables the tight closure of the extraction chamber by displacing the side wall of the cage and making it abut on the downstream part, and
- the actuator enables the piercing of the bottom wall of the pod in a second step by displacing the end wall of the cage. This second operation guarantees efficient piercing of the bottom wall which provides a good distribution of the liquid inside the pod. This operation avoids the presence of a headspace in the chamber holding the pod which is a guarantee of better extraction too.

For both walls, the actuator can be moved by the same motor which reduces the cost of manufacturing and operation of the extraction device.

A motor is used to enable the movement of the actuator. It is preferably an electrical motor. The motor is usually connected to the actuator by a gear mechanism with the shaft of the motor.

According to the preferred embodiment, of the upstream pod enclosing part is hold by two lateral sheets and the side wall is able to slide between these sheets, and each of said lateral sheets is attached to a first fixed transverse end axis and a second fixed transverse front axis. These sheets and these axis define the frame that supports the pod enclosing parts and the actuator.

According to the preferred embodiment, the common actuator comprises :
- a knee-joint mechanism comprising two symmetric assemblies of a push rod and a crank, each crank being attached to the transverse end axis and each rod being attached, directly or indirectly, to the sliding side wall of the upstream pod enclosing part, and
- a nut device configured to be displaced by a spindle, and
- the lateral parts of the nut device are designed to engage and slide in guiding curves designed in the cranks of the knee joint mechanism.

Accordingly, the movement of the nut device enables the movement of the knee-joint mechanism, which controls the movement of the side wall of the upstream pod enclosing part. The spindle can be rotated by a gear mechanism linked to the shaft of the motor. Then, with the same motor, the spindle, the nut device and the knee-joint mechanism are actuated.

According to the preferred embodiment, the guiding curve of each crank of the knee-joint mechanism comprises :
- a first guiding part to enable the knee-joint to move between a bent configuration and an extended configuration, and
- a second guiding part oriented along the horizontal longitudinal axis (XX') when the knee-joint is in the extended configuration.

The first guiding part of the curve is designed to enable the movement of the upstream pod enclosing part between the open configuration, where the knee-joint is bent, and the closed configuration, where the knee-joint is extended. In this extended configuration, the extraction chamber is firmly closed due to the force of the extended knee-joint. The chamber can resist to the increase of pressure inside the chamber during the beverage extraction without risk of any leak. This strong tightness is even more interesting in the case of extraction devices where the flange of the pod is configured for being pinched between the edge of the opened frond end of the side wall and the downstream pod enclosing part.

The second guiding part of the curve is in the continuity of the first part and extends therefrom. Due to its orientation along the horizontal longitudinal axis, it enables the movement of the nut device to the downstream direction once the knee-joint is extended and the extraction chamber is closed. Consequently, a longitudinal movement, in particular of the end wall of the upstream pod enclosing part, is still possible.

Preferably, the lateral parts of the nut can comprise wheels configured to roll in the guiding curves of the crank.

Preferably, the back side of the end wall of the upstream pod enclosing part is configured to be pushed by the front end of the nut device during the movement of the nut device along the second part of the guiding curve.

The back side of the end wall and the front end of the nut device are designed and positioned one relatively to the other so as to cooperate during the movement of the nut device along the second part of the guiding curve.

Since the end wall is freely movable, the force exerted by the nut device on the end wall pushes this end wall to the downstream direction inside the chamber. Since the chamber contains a pod, the front side of the end wall is urged against the bottom wall of the pod and the piercing elements are able to contact the bottom wall of the pod and to pierce it.

Whatever the height of the pod, the nut device is able to move the end wall until it becomes blocked by the pierced pod.

Preferably, the front side of the end wall bears a pod ejector comprising a back rod extending through the end wall, and
- the rod of the pod ejector is freely movable through the end wall, and
- the rod of the pod ejector is configured so as to be able to interact with the downstream end of the spindle of the nut device.

Preferably, the rod of the ejector is configured to be pushed by the front end of the spindle when the upstream pod enclosing part is being moved to the opened position.

The rod of the pod ejector is sized and positioned relatively to the spindle of the nut device so that the end of the rod interacts with the end of the spindle during the operation of ejection of the pod, that is when the upstream pod enclosing part is moved from the closed position to the opened position and the knee-joint is being bent. Such interaction provides a relative movement of the freely movable ejector inside the chamber helping the pod to separate from the piercing elements of the end wall.

Usually, the extraction device comprises a control system configured to control the actuation of the motor.

Preferably the control system is configured to measure the current of the motor and to detect the piercing of the pod based on an increase of the measured current. Based on this measure, the control system can be configured to stop the motor of the actuator and to initiate the beverage extraction by actuating the liquid pump.

In a second aspect of the invention, there is provided a beverage preparation machine comprising an extraction device such as described above.

Generally, this beverage machine comprises a liquid supply system connected to the upstream pod enclosing part. This liquid supply system can comprise :
- a liquid supply such as a liquid tank,
- pumping means to drive liquid form the liquid supply to the extraction device,
- heating and/or cooling means to adapt the temperature of the liquid before it is introduced inside the pod.

The liquid is usually water.

Usually, this beverage machine comprises a control system configured to control the extraction device and the supply of liquid to the extraction device and the motor of the actuator.

In a third aspect of the invention, there is provided a system comprising an extraction device such as described above and pods of different sizes or a beverage preparation machine such as described above and pods of different sizes,
wherein each of said pod comprises:
   - a pod body, said pod body comprising a side wall and a bottom wall defining a chamber, and
   - a top lid closing the top opening of the pod body, and
wherein said pods differ by the depths of the side walls.

Whatever the depth of the pod, the body and the lid of the pods can be made of paper material. In one preferred embodiment, the paper material is a multilayer paper material comprising a layer of paper coated with at least a plastic film, preferably a compostable plastic film. This compostable plastic film can be a multilayer plastic film. This film can provide additional properties such as air barrier and sealants to avoid delamination.

Preferably, the body is made of a paper material presenting a thickness of at least 100 µm, preferably at least 120 µm.

The extraction device of the system facilitates the piercing of such pods made of a thick material whatever the depth of the body.

Usually, the thickness of the material of the side wall and the bottom wall of the pod body is the same. As a result, there is no need to manufacture complex pods to obtain the piercing of the bottom wall of the pod in the extraction device.

Preferably, the pods comprise roasted and ground coffee and this coffee is compacted inside the pod. The compacted coffee facilitates the piercing of the bottom wall of the pod by providing a bearing face for the opening means of the upstream pod enclosing part.

In a fourth aspect, there is provided the use of a set of different pods, said pods differing by the depths of the side walls, in the extraction device such as described above or in a beverage machine such as described above or in a system such as described above.

In the present application :
- the term "pod" is used to broadly designate any kind of single-dose container suitable for preparing beverages or other edible products such as capsules, cartridges, portioned or individual packages without limitation to the shape of this container, the material this container is made of or the types of piercing means needed to extract the beverage therefrom.
- the term "longitudinally" refers to the orientation of the two enclosing parts one to the other and their movement along the longitudinal axis XX'. Accordingly, the term "transversally" refers to the orientation that is transverse or perpendicular to that longitudinal orientation. Generally, the longitudinal and transverse orientations extend in a horizontal plane. The terms "lateral" is defined by reference to the horizontal axis including the longitudinal axis XX'.
- the term "vertically", "upwardly" and "downwardly" refers to the movement of the pod in the extraction device from its introduction between the two enclosing parts and its removal therefrom. The terms "upper" and "lower" refer to this vertical axis too.
- the terms "upstream" and "downstream" refer to the path of liquid through the extraction device from the upstream pod enclosing part to the downstream enclosing part.

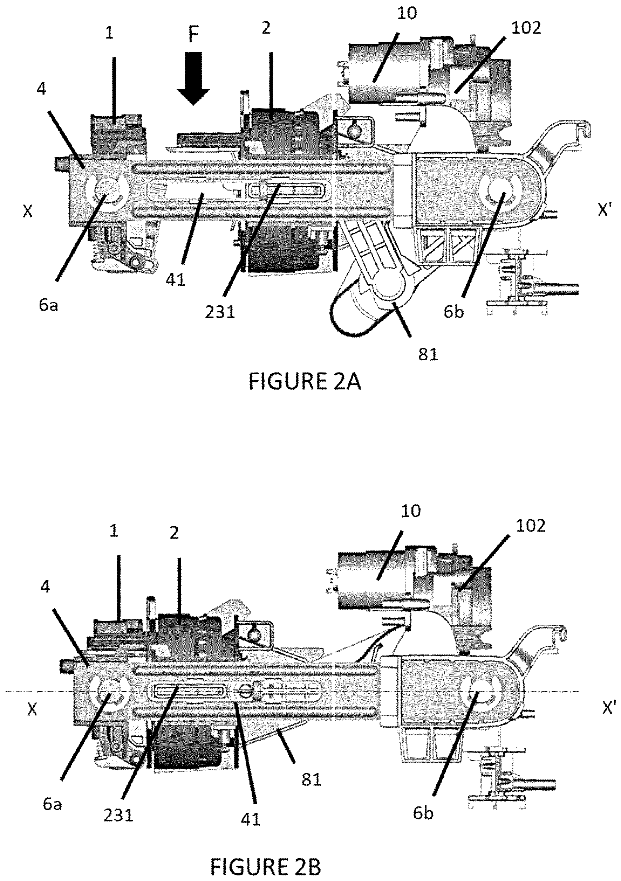

Generally, these terms are used to describe the relational positioning of features of the extraction device. These terms should be understood to refer to said device in its normal orientation when positioned in a beverage machine for the production of a beverage as shown in the figures 2A, 2B.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

Specific embodiments of the invention are now described further, by way of example, with reference to the following drawings in which :
Specific embodiments of the invention are now described further, by way of example, with reference to the following drawings in which :
- Figures 1A to 1C are different perspective view of pods used in the extraction device of the present invention,
- Figure 2A and 2B are side views of an extraction device according to the invention in opened and closed position respectively,
- Figure 3 is a perspective view of the downstream enclosing part isolated from the extraction device of Figures 2A,
- Figure 4 is a perspective view of the upstream pod enclosing part isolated from the extraction device of Figures 2B,
- Figure 5 is a vertical section view of the upstream pod enclosing part of Figures 2B,
- Figure 6A is an isolated perspective view of the common actuator of the side wall and the end wall of the upstream pod enclosing part in the opened position,
- Figure 6B is a top view of Figure 6A,
- Figure 6C is a vertical section view of Figure 6A,
- Figure 6D is an isolated perspective view of the common actuator and the upstream pod enclosing part in the opened position,
- Figures 7A is an isolated perspective view of the common actuator of the side wall and the end wall of the upstream pod enclosing part in the closed position,
- Figure 7B is a top view of Figure 7A,
- Figure 7C is a vertical section view of Figure 7A,
- Figure 8A is an isolated perspective view of the common actuator of the side wall and the end wall of the upstream pod enclosing part in the piercing position,
- Figure 8B is a top view of Figure 8A,
- Figure 8C is a vertical section view of Figure 8A,
- Figures 9A, 9B, 9C are horizontal section views of the common actuator, the side wall and the end wall of the upstream pod enclosing part in opened position, closed position and piercing position respectively.

### Detailed description of exemplary embodiments

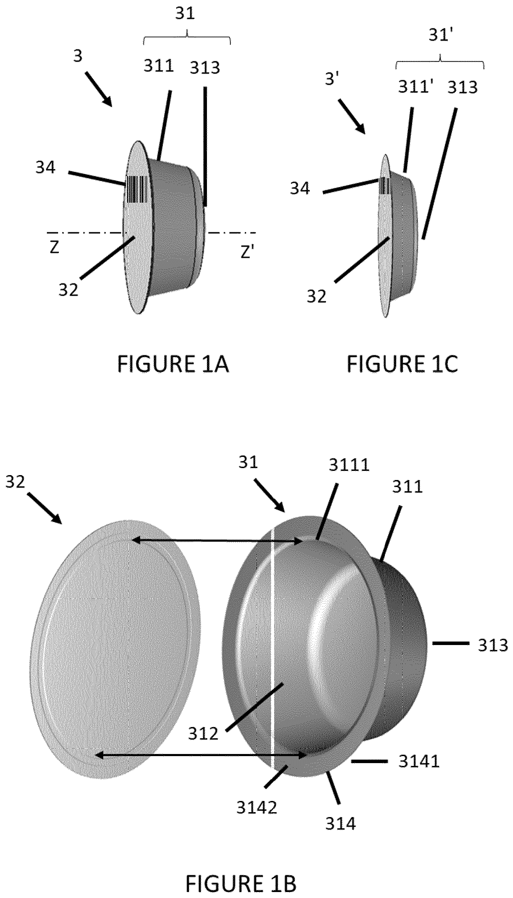

**Figures 1A** (perspective view) **and 1B** (exploded view) illustrate a pod 3 that can be used in the extraction device of the invention.

The pod 3 comprises a pod body 31 with one side wall 311 that extends axially from a bottom wall 313 towards a top. The side wall 311 extends towards a top opening 312. At the top opening 312, the body comprises a circumferential annular flange 314 that extends radially outward from the side wall 311 along the circumference of the opening 312.

The flange comprises an upper surface 3142 facing the top and a lower surface 3141. Generally, any transversal cross section of the body is circular from the bottom to the top and the flange is circular too.

The body delimits a chamber for containing a beverage ingredient.

This beverage ingredient is preferably an ingredient able to be extracted like roast and ground coffee.

In a less preferred manner, the beverage ingredient can be tea leaves or a water soluble powder ingredient such as : instant coffee powder, milk powder, cream powder, instant tea powder, cocoa powder, soup powder, fruit powder or mixture of said powders or even a soluble liquid ingredient or a beverage concentrate such as a syrup or milk concentrate. The powders can be agglomerated or sintered.

The capsule comprises a lid 32 that is fixed, sealed or attached to at least a part of the upper surface 3142 of the circumferential flange and accordingly covers and closes the top opening 312.

A machine-readable code 34 can be arranged on the lid. This code can provide different types of information such as :
- the nature of the beverage ingredient,
- the size of the pod,
- authorised pod,
- the extraction recipe to applied to the pod : temperature of the fluid, volume of the fluid, flow of the fluid, ...

The bottom wall 313 is adapted to be pierced so that liquid can be injected in the pod through the pierced openings.

The lid 32 is adapted to be opened by relative engagement with a piercing arrangement under the effect of the liquid pressure increase inside the pod during injection of liquid.

The pod shape is symmetric relatively to the central axial axis ZZ' extending from the bottom wall to the lid and the pod shape is asymmetrical relatively to the plane of the lid and the flange.

**Figure 1C** illustrates another pod 3' that can be used in the extraction device of the invention and differ from the pod 3 of Figure 1A only by the depth size (along axis ZZ') of the pod bodies 31'. The pod body 31 of the big pod 3 defines an ingredient chamber with a bigger volume than the pod body 31' of the small pod 3', the side wall 311 being higher than the side wall 311'. The diameter of the lids 32, 32' of the small and big pods are identical.

This difference in sizes enable the preparation of different beverages, preferably different coffee beverages like ristretto, espresso, lungo (long cups), americano, ...

Other sizes than those illustrated can be provided, like an intermediate size.

The machine-readable code 34 can store information about the size of the pod.

Preferably, this pod comprises roast and ground coffee and this roast and ground coffee is compacted inside the pod itself as described in WO 2020/089403.

Preferably the pods 3 are essentially made of a biodegradable or compostable material, preferably a home compostable material since extracted coffee cakes can easily be made composted at home.

Preferably, the material of the pod comprises a paper layer. This paper layer is formable, i.e. a sheet of paper can be given a three-dimensional shape that is the form of the body of the above described pod. Contrary to common pods made of filter paper, this paper is thick and keep the three-dimensional shape provided during a shaping step of manufacturing of the pod. Preferably, the paper layer of the pod can have a grammage of at least 20 g/m², preferably at most 150 g/m². The paper of the body can present a higher grammage than the paper of the id ; the grammage of the paper of the body can be comprised between 80 and 150 g/m².

Both papers can present a grammage of about 100 g/m².

The material of the pod can comprise a layer of paper and some other materials to provide additional properties such as air barrier, stretchable or deformable properties. These additional properties can be provided with at least one plastic layer, for example as described in WO 2020/114995. Some additional layers of the body and of the lid can be different.

In fact, in order to shape the paper as a container for the beverage and to create a barrier to protect the beverage ingredient, the paper must be sufficiently thick. In addition, to create a barrier to atmosphere, in particular oxygen to which roast and ground coffee is particularly sensitive, the layer of paper is preferably coated with a compostable plastic film. Sealants layers are often necessary to attach the different layers and prevent delamination. For example, such a multilayer paper material can be the material described in WO 2020/114995 or in WO 2022/022899.

With such pod materials, the thickness of the multilayer paper material of the body can be about 200 µm and the thickness of the multilayer paper material of the lid can be about 140 µm which means that the thickness of the flange is usually greater than 200 µm, even greater than 300 µm.

The extraction device of the present invention can be configured for using alternative containers to those described above as soon as they comprise a body defining a chamber and a lid to close the chamber. The two pod enclosing parts just needs to present internal shapes conformal to the containers.

For example, the container can be a frusto-conical capsule made of aluminum or plastic.

**Figure 2A** is a side view of an extraction device of a beverage preparation machine according to the invention. The extraction device comprises an upstream pod enclosing part 2 and a downstream pod enclosing part 1 relatively translatable along a longitudinal axis XX'. Preferably, this axis XX' is essentially horizontal. In Figure 2A, these pod enclosing parts 1, 2 are positioned in the fully opened position of the extraction device, where the enclosing parts are at a position that is the most distant from each other.

A pod can be introduced through an insertion section positioned above the two enclosing parts 1, 2, from which it can fall by gravity inside a pod holder between these two enclosing parts 1, 2 as illustrated by the arrow F. After extraction, the pod can fall by gravity again below these two enclosing parts 1, 2 when they move apart one from the other.

The two pod enclosing parts 1, 2 are hold between two lateral and longitudinal sheets 4 and between two transversal axis 6a, 6b. The upstream pod enclosing part 2 is movable in translation between these two sheets 4 and these two axis 6a, 6b in order to assess different relative and functional positions. In the illustrated embodiment, the lateral sides of the carrier 23 of the upstream pod enclosing part comprise sliding parts 231 designed to engage in grooves 41 of the lateral sheets so as to form a slide together.

The downstream enclosing part 1 is fixed and only the upstream pod enclosing part 2 is movable back and forth along the longitudinal axis XX' between this fully opened position of Figure 2A and the closed position illustrated in **Figure 2B****.** In Figure 2B, these two parts are in a closed position and form an extraction chamber configured to enclose a pod during extraction.

The upstream pod enclosing part is moved by an actuator comprising a knee-joint mechanism 81 cooperating at one end with the upstream pod enclosing part 2 and at the other end with the transversal axis 6b. This knee-joint mechanism is actuated by a motor 10 through a gear mechanism 102. In Figure 2A, this knee-joint mechanism is bent, whereas in Figure 2B, the knee-joint mechanism is extended which guarantees a tight closure of the upstream and downstream enclosing parts.

The insertion section 4 can comprise a recognition device to recognise or identify the pod that is introduced inside the extraction device. The recognition device can comprise :
- means to block temporary to block the pod in a recognition position, and
- a recognition device to recognise the pod blocked in this temporary recognition position, such as a camera.

The control system can be configured to enable the blocking means to let the pod fall to the pod holder of the extraction device once the pod has been recognised.

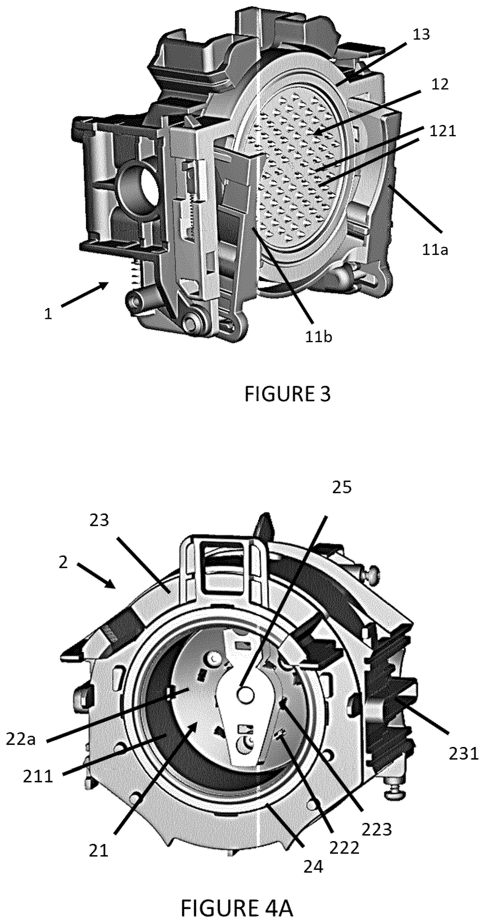

**Figure 3** is an isolated perspective view of the downstream pod enclosing part 1 of Figures 2A and 2B. The downstream part 1 defines a plate perpendicular (that is transverse) to the longitudinal axis XX'. This plate comprises a central downstream plane piercing arrangement 12 for opening the lid 32 of the pod when the extracting liquid is introduced inside the pod and inflates the lid. Opening happens by relative engagement of spikes with the lid under the effect of the rise in pressure of the injected liquid in the pod body chamber. This downstream plane piercing arrangement can comprise a plate comprising opening elements 121 such as spikes, that can present the shape of cones or pyramids, optionally truncated at their ends, on its surface turned to the lid. In addition, the plate comprises traversing holes to evacuate the beverage dispensed from the opened lid to a tube or nozzle collecting and dispensing beverage to a drinking cup.

The downstream part 1 comprises a pod holder that is attached to the peripheral area. While being attached, the pod holder can be moved between two positions. In Figure 3, the pod holder is in the first position for receiving and holding the lid of the pod in front of the downstream plane piercing arrangement.

The pod holder 11 comprises a pair of arms 11a, 11b that retain and position the pod when this pair is in the first receiving position such as illustrated in Figure 3. In this position of the pod holder, these arms retain vertically the pod, that is they stop the vertical fall of the pod falling from the insertion position.

The pair of retaining elements 11a, 11b are movable from the receiving position to a second retracted position at the lateral sides of the downstream plane piercing when the upstream pod enclosing part is translated longitudinally from the fully opened position to the closed position.

Preferably, each of the arms 11a, 11b of the pod holder can be locked in the retracted position during the extraction of the pod and during the ejection of the pod so as to prevent any malfunction during ejection.

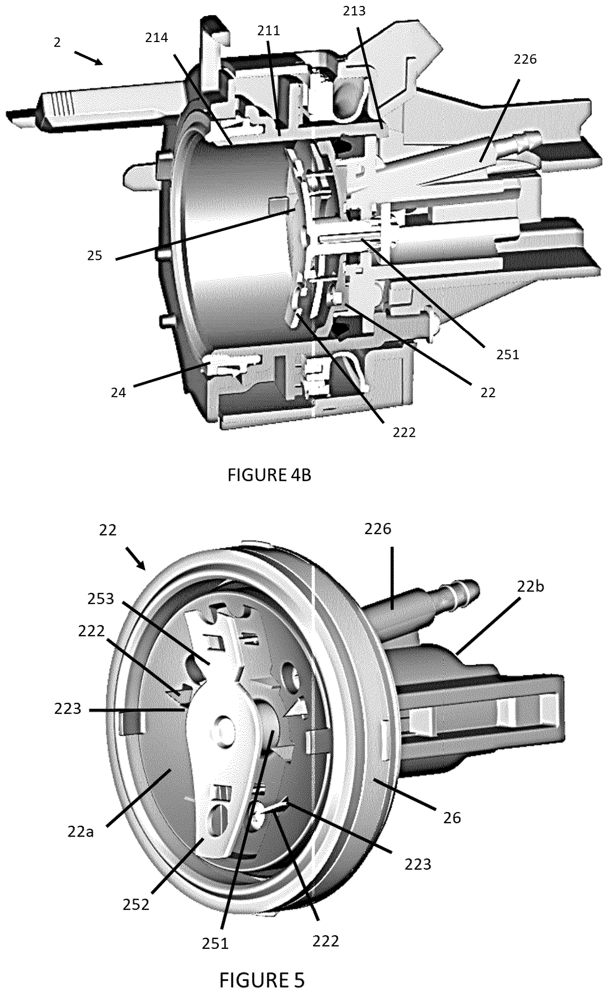

**Figures 4A****,** **4B** are isolated views of the upstream pod enclosing part 2 of the extraction device of Figures 2B.The upstream part defines an empty cage or cavity 21 for enclosing the pod body. This cage is defined by a side wall 11 extending between an opened front end 214 and a back end 213 along a cage longitudinal axis. This side wall is configured to enclose the side wall of the pod and generally presents a conformal shape to the pod body side wall. In the illustrated embodiment, the side wall presents a circular section.

The side wall is fixedly attached in an external carrier or chassis 23. This carrier is translatable between the open position and the closed position by means of the slide construction between its lateral sliding parts 231 with the corresponding sheet grooves 41 as described above. The carrier 23 and the side wall are made movable by an actuator as described below.

The cage 21 is defined too by its end wall 22 that is transverse to the longitudinal axis of the cage. **Figure 5** is an isolated view of the end wall 22. This end wall bears piercing elements 222 that rise from its front side 22a and that are configured to open the bottom wall of the pod inserted in the cage. The piercing elements rise by a certain piercing height from the front side of the end wall. This upstream piercing arrangement can comprise piercers in the form of blades 222. These blades can be designed and positioned to pierce the wall of the bottom of the pod body when the upstream and downstream pod enclosing parts are brought to the closed position and when the movable end wall is pushed to the bottom wall of the pod as described below.

The end wall 22 comprises at least one liquid injector for supplying liquid into the pod through the holes opened in the bottom wall of the pod. The liquid injector comprises a liquid inlet 226 at the back side 22b of the end wall. This liquid inlet is connected to the liquid supply system of the beverage preparation machine. The liquid inlet is configured to supply liquid at the front side 22a of the end wall and to the cage. Liquid emerges at several liquid outlets 223 provided at the front side 22a of the end wall. A seal 26 provides liquid tightness for this movable end wall 22. In the illustrated embodiment, liquid inlets 223 are provided around the blades 222 to enable the introduction of liquid in the pierced holes of the bottom wall of the pod. Yet any other known means to introduce liquid in the cage can be provided, such as a shower.

This end wall 22 is not attached to the side wall 21 of the cage and is freely movable longitudinally inside the side wall 211 of the cage under the force of other parts of the system. The end wall can be moved forth and back according to the step of the extraction :
- it can be pushed to the back by the bottom wall of a pod when the upstream pod enclosing part 2 is closing around a hold pod so as to adapt the volume of the cage to the volume of the pod, and
- it can be pushed to the front by an actuator when the chamber is closed so as to enable the blades 222 to pierce the bottom wall of the pod. This actuator is the same as the actuator of the side wall as further described below. The force of the actuator is directly applied to the end wall ; no intermediate resilient means like a spring is present. As a result, the force of the actuator is fully transmitted to the piercers, which enable an efficient piercing of the bottom wall whatever the thickness of the material.
- it can be pulled to the front by the extracted pod when the chamber is being opened due to the friction force between the pod bottom wall and the blades 222 introduced in said bottom.

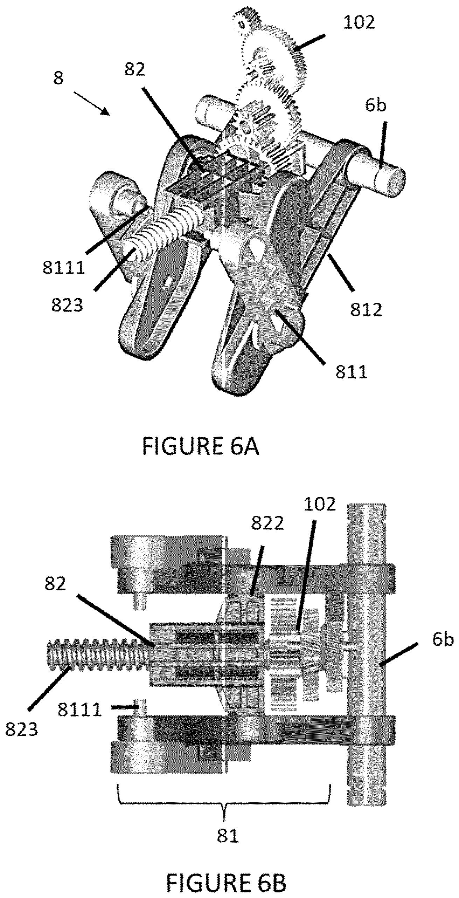

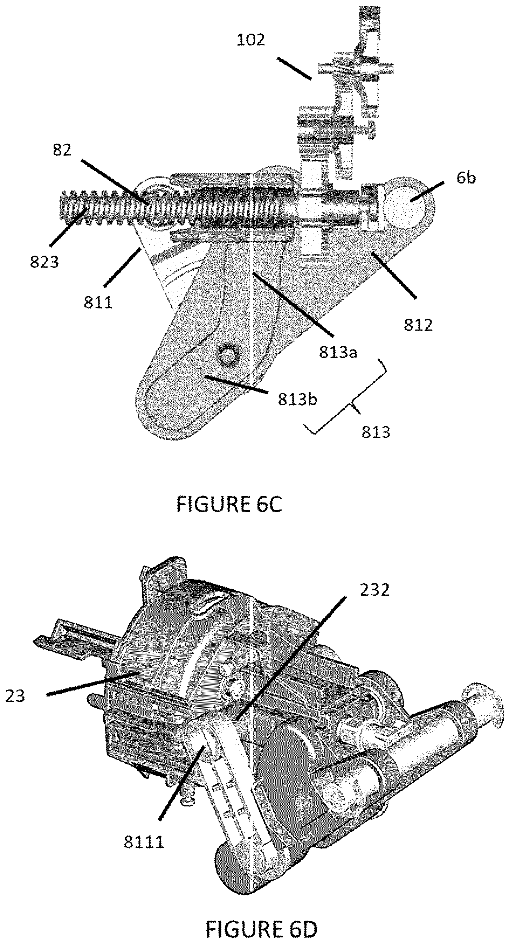

**Figures 6A-6C** illustrate the common actuator 8 of the side wall and the end wall when the upstream pod enclosing part is in the opened position.

This actuator comprises a knee-joint mechanism 81 comprising two assemblies of a push rod 811 connected to a crank 812. Each assembly is positioned on one lateral side of the upstream pod enclosing part. Each crank 812 is attached to the fixed transverse end axis 6b. The free end 8111 of each rod 811 is attached to the side wall 211 of the upstream pod enclosing part either directly or indirectly : in the illustrated embodiment and as shown in **Figure 6D****,** the ends 8111 of the push rods are attached to a connecting part 232 of the carrier of the upstream pod enclosing part.

The actuator comprises a nut device 82 configured to be displaced by a spindle 823. This spindle is rotated by a gear mechanism 102 connected to the shaft of the motor. The nut comprises two wheels 822 and each of these wheels is engaged and slides in a corresponding guiding curve 813 designed in the cranks 812 of the knee joint mechanism. As a result, the movement of the nut actuates the movement of the knee-joint, which actuates the movement of the carrier and the side wall of the cage.

In particular, the guiding curve 813 of each crank of the knee-joint mechanism comprises a first guiding curve 813a to enable knee-joint to move between its bent configuration, corresponding to the opened position of the extraction device (Figure 2A), and its extended or aligned configuration, corresponding to the closed position of the extraction device (Figure 2B). In this closed position, the alignment of the knee-joint mechanism guarantees that the chamber is well closed and cannot open under the rise of pressure inside the chamber during the beverage extraction. The front seal 24 of the upstream pod enclosing part is urged against the peripheral area 13 of the downstream enclosing part.

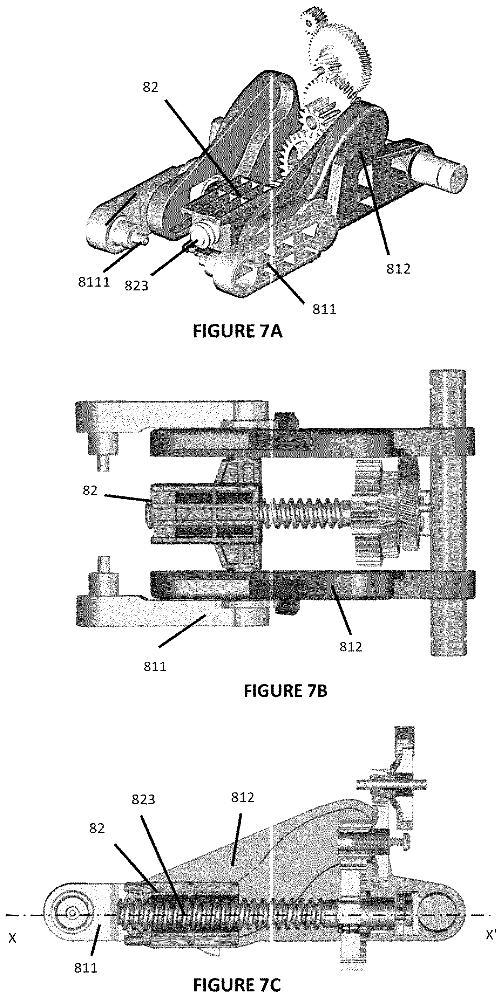

**Figures 7A-7C** illustrate the common actuator 8 when the upstream pod enclosing part is in this closed position. Each lateral part of the nut is positioned at one end of the first guiding curve 813a. In this position, each lateral part of the nut is positioned at one end of a second guiding curve 813b which extends from the first guiding curve 813 a. This second guiding curve 813b is designed so that, when the knee-joint is in the extended configuration, this second guiding curve is oriented along the horizontal longitudinal axis (XX'). Consequently, this second guiding curve enables the movement of the nut according to the longitudinal direction while the side wall 211 of the cage is firmly closed. In particular, this movement of the nut guided by the second guiding curve enables the movement of the end wall 22 of the cage while the side wall 211 is kept immobile.

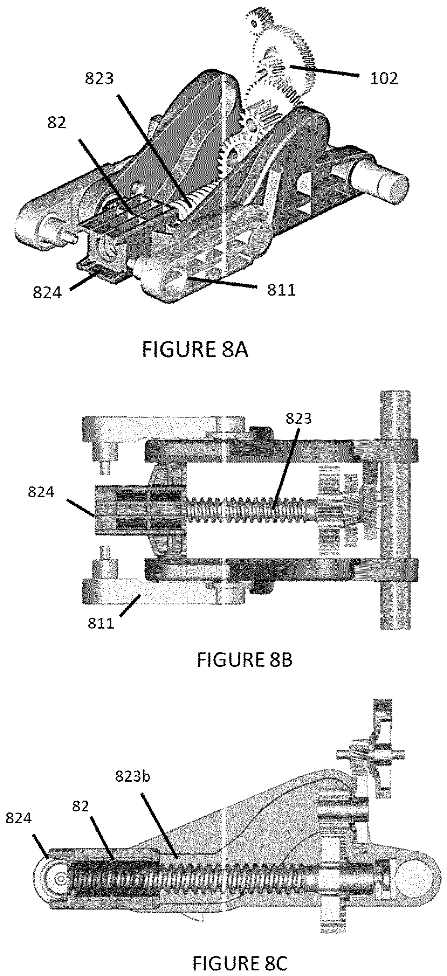

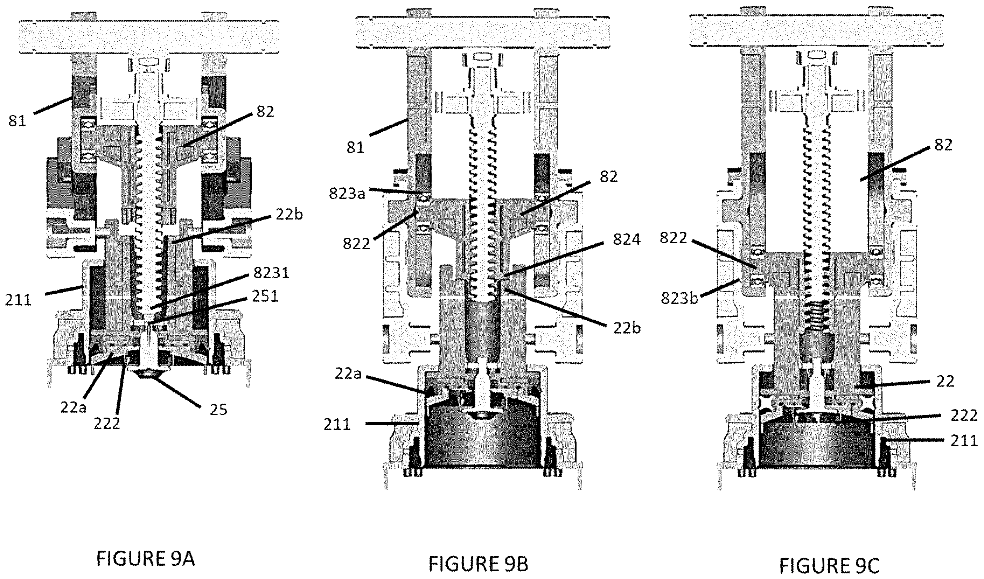

**Figures 8A-8C** illustrate the common actuator 8 wherein the nut 82 was moved by the spindle 823 to the other end of the second guiding curve 813b further to the action of the spindle 823 by the gear mechanism 102. As a result of the movement of the nut from the position illustrated in Figures 7A-7C to the position illustrated in Figures 8A-8C, the front end 824 of the nut is able to engage and push the back side 22b of the end wall of the chamber inside the chamber as described below in relation with Figure 9C.

**Figures 9A-9C** illustrate the relative positions of the common actuator, the side wall 211 of the upstream pod enclosing part and the end wall 22 of the upstream pod enclosing part in the opened position, closed position and piercing position respectively.

In Figure 9A, the upstream and downstream enclosing parts are in the opened position where a pod can be introduced in the extraction device. The knee-joint mechanism 81 is bent. The nut device 82 is at its most backwards position along the spindle 823.

From the step illustrated in Figure 9A to the step illustrated in Figure 9B, the motor was actuated and the spindle 823 rotated so that the nut device 82 was translated upwardly. Due to the engagement of the wheels 822 of the nut device in the first part of the guiding curve of the crank, the knee-joint mechanism is moved to its extended position which provides the movement of the side wall 211 upwardly and around a pod hold in the pod holder. During the relative movement of the side wall and the pod, the bottom wall of the pod enters into contact with the front side 22a of the end wall and the end wall 22 freely moves in direction of the back end of the side wall further to this contact. The pod becomes enclosed but the bottom wall of the pod is not pierced. In particular, for pods presenting a depth smaller than the size of the chamber, the end wall 22 is still freely movable in direction of the back end of the side wall and no piercing force can be applied by the blades 222 on their bottom walls. Even, for the biggest pods, generally, the piercing may not happen, in particular due to the material thickness.

From the step illustrated in Figure 9B to the step illustrated in Figure 9C, the motor is still actuated and the spindle 823 rotated. Due to the engagement of the wheels 822 of the nut device in the second part 813b of the guiding curve of the crank, the knee-joint mechanism remains in the extended position and the nut goes on translating. During this translation, the front end 824 of the nut engages the back side 22b of the end wall and pushes it inside the cage. The movement of the nut and the end wall continues until the end wall 22 engages strongly the bottom wall of the pod present in the cage and the blades 222 pierces the bottom wall. The force exerted by the motor through the spindle is sufficient to enable the blades to pierce a thick pod material. Consequently, there is no need to provide the system with specific pods presenting a thinner bottom wall.

The process control system of the extraction device can be configured to measure the current supplied to the motor during the operation of closure of the two pod enclosing parts. The measure enables the detection of :
- the closure of the formation of the cage when the two enclosing parts form a tight chamber and the knee-joint reaches its extended position, which corresponds to a first increase of the current, and
- the piercing of the bottom wall of the pod when the nut device pushes the end wall of the chamber, which corresponds to a second increase of the current. When this second increase is detected, the motor is stopped and extraction can be launched by introduction of liquid through the water injector.

Once the extraction is finished, the motor is actuated in the other direction and the nut device 82 is translated back along the second part 813b of the guiding curve with the effect that the end wall 22 is able to freely move in the chamber again. Due to the engagement of the blades 222 in the bottom wall of the pod, the end wall 22 remains often attached to the bottom wall. In fact, the pod can drive the freely movable end wall 22 to the front end of the chamber due to the friction force between the blades 222 and the bottom wall and during the ejection of the pod.

As the nut device 82 is translated back along the first part 813a of the guiding curve, the upstream pod enclosing part moves away from the downstream enclosing part.

In order to facilitate the ejection of the pod from the opened upstream pod enclosing part, this part comprises an ejector 25 such as illustrated in Figure 5. This ejector comprises a front surface in contact with the bottom wall of the pod when the pod is enclosed in the chamber and a rod 251 extending from its back surface through the end wall and in direction of the end 823 of the spindle. This rod is free to move through the end wall. This rod 251 is aligned with the spindle so that, when the knee-joint is bending and the upstream pod enclosing part is moving back to the open position, the upper end of the rod is urged against the end 823 of the spindle with the effect that the ejector 25 is pushed upstream and pushes the pod bottom wall. In particular, the ejector facilitates the separation of the bottom wall from the blades 222 ; as the material of the pod can be thick and even more thick once wetted, the separation of the pod from the blades by separation of the upstream and downstream enclosing parts is not always sufficient.

Preferably, the ejector 25 is designed to prevent the smaller pods from remaining blocked transversally between the upstream and downstream enclosing parts after separation from the blades : in particular, the front end of the ejector comprises a downwardly transversal extension 251 extending from the rod in direction of the edge of the end wall and defines a downwardly oriented sliding surface or guiding chute for the bottom wall of the ejected pod. Preferably, the ejector 25 can provide the effect of improving the closure of the upstream and downstream enclosing parts when the bigger pods are loaded in the extraction device. Actually, due to their asymmetric shapes of the pods, when bigger pods are introduced in the pod holder of the extraction device, the bottom walls of such pods can be so inclined/positioned in the holding position that, when the upstream pod enclosing part is moved to the downstream pod enclosing part, the pod is not set upright and closure cannot be correctly reached. Preferably, the ejector comprises un upwardly transversal extension 253 extending from the rod and designed to straighten up the bottom wall of the pod while the upstream pod enclosing is moved to the pod.

Whatever the size of the pod and whatever the thickness of the material of the pod bottom wall, the extraction device of the invention enables :
- a tight closure of the upstream and downstream pod enclosing parts by means of the knee-joint mechanism,
- an adaptation of the internal size of the chamber to the pod depth and a correct piercing of any pod by translation of the nut device.

Although the invention has been described with reference to the above illustrated embodiments, it will be appreciated that the invention as claimed is not limited in any way by these illustrated embodiments.

The scope of protection of the invention is defined in the claims. Furthermore, where known equivalents exist to specific features, such equivalents are incorporated as if specifically referred in this specification.

As used in this specification, the words "comprises", "comprising", and similar words, are not to be interpreted in an exclusive or exhaustive sense. In other words, they are intended to mean "including, but not limited to".

### List of references in the drawings :

| | | | |
|---|---|---|---|
| beverage device | | | 10 |
| downstream enclosing part | | | 1 |
| pod holder arms | | | 11a, 11b |
| downstream plate piercing arrangement | | | 12 |
| | spikes | | 121 |
| peripheral area | | | 13 |
| upstream pod enclosing part | | | 2 |
| | cage | | 21 |
| | side wall | | 211 |
| | back end | | 213 |
| | front end | | 214 |
| | end wall | | 22 |
| | | front side | 22a |
| | | back side | 22b |
| | | piercing elements | 222 |
| | | liquid outlets | 223 |
| | | liquid inlet | 226 |
| | carrier | | 23 |
| | sliding part | | 231 |
| | connection to knee-joint | | 232 |
| | seal | | 24, 26 |
| | pod ejector | | 25 |
| | back rod | | 251 |
| pod | | | 3, 3' |
| body | | | 31, 31' |
| | side wall | | 311, 311' |
| | | top end | 3111 |
| | top opening | | 312 |
| | bottom wall | | 313 |
| | annular flange | | 314 |
| | | top face | 3141 |
| | | bottom face | 3142 |
| lid | | | 32 |
| machine-readable code | | | 34 |
| sheet | | | 4 |
| | slide groove | | 41 |
| axis | | | 6a, 6b |
| actuator | | | 8 |
| | knee joint mechanism | | 81 |
| | push rod | | 811 |
| | free end | | 8111 |
| | crank | | 812 |
| | guiding curve | | 813 |
| | first part | | 813a |
| | second part | | 813b |
| | nut device | | 82 |
| | lateral parts | | 821 |
| | wheel | | 822 |
| | spindle | | 823 |
| | spindle front end | | 8231 |
| | nut device front end | | 824 |
| motor | | | 10 |
| shaft | | | 101 |
| gear mechanism | | | 102 |

## Claims

1. An extraction device for extracting a beverage ingredient by supplying an extraction liquid into a pod,
said extraction device comprising :
- upstream and downstream pod enclosing parts (1, 2), wherein the upstream pod enclosing part (2) is translatable along a horizontal longitudinal axis (XX') between an open position for inserting and removing the pod (3) and a closed position for forming an extraction chamber enclosing the pod during extraction,
- the upstream part (2) defining a cage (21) and comprising piercing elements (222) for piercing the bottom wall (313) of the pod and liquid outlet openings (223),
- the downstream part (1) comprising a plate transverse to the longitudinal axis (XX'), said plate comprising a downstream plane piercing arrangement (12) for opening the lid (32) of the pod,
- a pod holder configured to hold the pod between the upstream and downstream pod enclosing parts when these parts are in the opened position, said pod holder being configured to hold the lid (32) of the pod in front of the downstream plane piercing arrangement (12), and
wherein, in the upstream pod enclosing part (1), the cage (21) comprises :
- a side wall (211) extending between an opened front end (214) and a back end (213) along a cage longitudinal axis, said side wall being translatable between the open position and the closed position, and
- an end wall (22) transverse to said longitudinal axis of the cage, said end wall presenting a front face (22a), said front face bearing the piercing elements (222) and the liquid outlet openings (223), wherein said end wall (22) is movable longitudinally inside the side wall (211) of the cage of said upstream pod enclosing part, and
wherein the side wall (211) and the end wall (22) are actuated by one common motor (10) and a common actuator (8), said common actuator being connected to the side wall (211) and to the end wall (22) so that,
the extraction device is **characterized in that** when the upstream pod enclosing part (2) is translated from the open position to the closed position :
- first, the side wall (211) is translated from the open to the closed position to form the extraction chamber around the pod, and
- then, the end wall (22) is moved inside the side wall (211) from a backward position up to a frontward position to pierce the bottom wall of the pod.

2. Extraction device according to the precedent claim, wherein the side wall (211) of the upstream pod enclosing part is hold by and able to slide between two lateral sheets (4), each of said lateral sheets being attached to a first fixed transverse end axis (6b) and a second fixed transverse front axis (6a), and
wherein the common actuator comprises :
- a knee-joint mechanism (81) comprising two symmetric assemblies of a push rod (811) and a crank (812), each crank being attached to the transverse end axis (6b) and each rod being attached to the sliding side wall (211) of the upstream pod enclosing part, and
- a nut device (82) configured to be displaced by a spindle (823), and
wherein lateral parts (821) of the nut device are designed to engage and slide in guiding curves (813) designed in the cranks (812) of the kne joint mechanism.

3. Extraction device according to the precedent claim, wherein the guiding curve (813) of each crank of the knee-joint mechanism comprises :
- a first guiding part (813a) to enable knee-joint to move between a bent configuration and an extended configuration, and
- a second guiding part (813b) oriented along the horizontal longitudinal axis (XX') when the knee-joint is in the extended configuration.

4. Extraction device according to the precedent claim, the back side (22b) of the end wall of the upstream pod enclosing part is configured to be pushed by the front end (824) of the nut device during the movement of the nut device (82) along the second part (813b) of the guiding curve.

5. Extraction device according to Claim 3 or 4, wherein the front side (22a) of the end wall bears a pod ejector (25), said pod ejector comprising a back rod (251) extending through the end wall (22), and
wherein said rod of the pod ejector is freely movable through the end wall (22), and
wherein said rod of the pod ejector is configured so as to be able to interact with the downstream end (8231) of the spindle of the nut device.

6. Extraction device according to the precedent claim, wherein the rod (251) of the ejector is configured to be pushed by the front end (8231) of the spindle when the upstream pod enclosing part (2) is in the opened position.

7. An extraction device according to any one of the precedent claims, wherein said device comprise a control system configured to control the actuation of the motor, and wherein .
the control system is configured to measure the current of the motor and to detect the piercing of the pod based on an increase of the measured current.

8. Beverage preparation machine comprising an extraction device according to any one of Claims 1 to 7.

9. System comprising an extraction device according to any one of Claims 1 to 7 and pods of different sizes or a beverage preparation machine according to Claim 8 and pods of different sizes,
wherein each of said pod (3, 3') comprises :
- a pod body (31), said pod body comprising a side wall (311) and a bottom wall (313) defining a chamber, and
- a top lid (32) closing the top opening of the pod body, and
wherein said pods differ by the depths of the side walls (311).

10. System according to the precedent claim, wherein the body of the pods is made of a paper material presenting a thickness of at least 100 µm, preferably at least 120 µm.

11. System according to the precedent claim, wherein the paper material is a multilayer paper material comprising a layer of paper coated with at least a plastic film.

12. System according to, wherein the pod comprises compacted roasted and ground coffee.

13. System according to any one of Claims 9 to 12, wherein the thickness of the material of the side wall and the bottom wall of the pod body is the same.

14. Use of a set of different pods (3, 3'), said pods differing by the depths of the side walls (311), in the device according to any one of Claims 1 to 7 or a beverage machine according to Claim 8 or a system according to Claim 9 to 13.

## Patentansprüche

1. Extraktionsvorrichtung zum Extrahieren eines Getränkeinhaltsstoffs durch Zuführen einer Extraktionsflüssigkeit in eine Kapsel, wobei die Extraktionsvorrichtung umfasst:
- ein vorgelagertes und ein nachgelagertes Kapselumschließungsteil (1, 2), wobei das vorgelagerte Kapselumschließungsteil (2) entlang einer horizontalen Längsachse (XX') zwischen einer offenen Position zum Einsetzen und/oder Entfernen der Kapsel (3) und einer geschlossenen Position zum Bilden einer Extraktionskammer, die die Kapsel während der Extraktion umschließt, verschiebbar ist,
- wobei das vorgelagerte Teil (2) einen Käfig (21) definiert und Durchstechelemente (222) zum Durchstechen der Bodenwand (313) der Kapsel und Flüssigkeitsauslassöffnungen (223) umfasst,
- wobei das nachgelagerte Teil (1) eine Platte quer zur Längsachse (XX') umfasst, wobei die Platte eine nachgelagerte ebene Durchstechanordnung (12) zum Öffnen des Deckels (32) der Kapsel umfasst,
- einen Kapselhalter, der konfiguriert ist, um die Kapsel zwischen dem vorgelagerten und dem nachgelagerten Kapselumschließungssteil zu halten, wenn sich diese Teile in der geöffneten Position befinden, wobei der Kapselhalter konfiguriert ist, um den Deckel (32) der Kapsel vor der nachgelagerten ebenen Durchstechanordnung (12) zu halten, und
wobei in dem vorgelagerten Kapselumschließungsteil (1) der Käfig (21) umfasst:
- eine Seitenwand (211), die sich zwischen einem geöffneten vorderen Ende (214) und einem hinteren Ende (213) entlang einer Käfiglängsachse erstreckt, wobei die Seitenwand zwischen der offenen Position und der geschlossenen Position verschiebbar ist, und
- eine Stirnwand (22) quer zu der Längsachse des Käfigs, wobei die Stirnwand eine Stirnfläche (22a) aufweist, wobei die Stirnfläche die Durchstechelemente (222) und die Flüssigkeitsauslassöffnungen (223) trägt, wobei die Stirnwand (22) längs innerhalb der Seitenwand (211) des Käfigs des vorgelagerten Kapselumschließungsteils beweglich ist, und
wobei die Seitenwand (211) und die Stirnwand (22) durch einen gemeinsamen Motor (10) und einen gemeinsamen Aktuator (8) betätigt werden, wobei der gemeinsame Aktuator mit der Seitenwand (211) und mit der Stirnwand (22) verbunden ist, sodass
die Extraktionsvorrichtung **dadurch gekennzeichnet ist, dass**, wenn das vorgelagerte Kapselumschließungsteil (2) aus der offenen Position in die geschlossene Position verschoben wird:
- zunächst die Seitenwand (211) aus der offenen in die geschlossene Position verschoben wird, um die Extraktionskammer um die Kapsel herum zu bilden, und
- dann die Stirnwand (22) innerhalb der Seitenwand (211) aus einer rückwärtigen Position bis zu einer vorderen Position bewegt wird, um die Bodenwand der Kapsel zu durchstechen.

2. Extraktionsvorrichtung nach dem vorstehenden Anspruch, wobei die Seitenwand (211) des vorgelagerten Kapselumschließungsteils durch zwei seitliche Bleche (4) gehalten wird und in der Lage ist, zwischen diesen zu gleiten, wobei jedes der seitlichen Bleche an einer ersten festen quer verlaufenden Endachse (6b) und einer zweiten festen quer verlaufenden Frontachse (6a) angebracht ist und
wobei der gemeinsame Aktuator umfasst:
- einen Kniegelenkmechanismus (81), der zwei symmetrische Baugruppen aus einer Schubstange (811) und einer Kurbel (812) umfasst, wobei jede Kurbel an der quer verlaufenden Endachse (6b) angebracht ist und jede Stange an der gleitenden Seitenwand (211) des vorgelagerten Kapselumschließungsteils angebracht ist und
- eine Muttervorrichtung (82), die konfiguriert ist, um durch eine Spindel (823) verschoben zu werden, und
wobei seitliche Teile (821) der Muttervorrichtung ausgelegt sind, um in Führungskurven (813) einzugreifen und in diesen zu gleiten, die in den Kurbeln (812) des Kniegelenkmechanismus ausgebildet sind.

3. Extraktionsvorrichtung nach dem vorstehenden Anspruch, wobei die Führungskurve (813) jeder Kurbel des Kniegelenkmechanismus umfasst:
- ein erstes Führungsteil (813a), um dem Kniegelenk zu ermöglichen, sich zwischen einer gebeugten Konfiguration und einer gestreckten Konfiguration zu bewegen, und
- ein zweites Führungsteil (813b), das entlang der horizontalen Längsachse (XX') ausgerichtet ist, wenn sich das Kniegelenk in der gestreckten Konfiguration befindet.

4. Extraktionsvorrichtung nach dem vorstehenden Anspruch, wobei die Rückseite (22b) der Stirnwand des vorgelagerten Kapselumschließungsteils konfiguriert ist, um durch das vordere Ende (824) der Muttervorrichtung während der Bewegung der Muttervorrichtung (82) entlang des zweiten Teils (813b) der Führungskurve geschoben zu werden.

5. Extraktionsvorrichtung nach Anspruch 3 oder 4, wobei die Vorderseite (22a) der Stirnwand einen Kapselauswerfer (25) trägt, wobei der Kapselauswerfer eine hintere Stange (251) umfasst, die sich durch die Stirnwand (22) erstreckt, und
wobei die Stange des Kapselauswerfers frei beweglich durch die Stirnwand (22) ist und
wobei die Stange des Kapselauswerfers konfiguriert ist, um in der Lage sein, mit dem nachgelagerten Ende (8231) der Spindel der Muttervorrichtung zu interagieren.

6. Extraktionsvorrichtung nach dem vorstehenden Anspruch, wobei die Stange (251) des Auswerfers konfiguriert ist, um durch das vordere Ende (8231) der Spindel geschoben zu werden, wenn sich das vorgelagerte Kapselumschließungsteil (2) in der geöffneten Position befindet.

7. Extraktionsvorrichtung nach einem der vorstehenden Ansprüche, wobei die Vorrichtung ein Steuerungssystem umfasst, das konfiguriert ist, um die Betätigung des Motors zu steuern, und wobei
das Steuerungssystem konfiguriert ist, um den Strom des Motors zu messen und das Durchstechen der Kapsel basierend auf einer Erhöhung des gemessenen Stroms zu erkennen.

8. Getränkezubereitungsmaschine, die eine Extraktionsvorrichtung nach einem der Ansprüche 1 bis 7 umfasst.

9. System, das eine Extraktionsvorrichtung nach einem der Ansprüche 1 bis 7 und Kapseln unterschiedlicher Größe oder eine Getränkezubereitungsmaschine nach Anspruch 8 und Kapseln unterschiedlicher Größe umfasst,
wobei jede der Kapseln (3, 3') umfasst:
- einen Kapselkörper (31), wobei der Kapselkörper eine Seitenwand (311) und eine Bodenwand (313) umfasst, die eine Kammer definieren, und
- einen oberen Deckel (32), der die obere Öffnung des Kapselkörpers verschließt, und
wobei sich die Kapseln durch die Tiefe der Seitenwände (311) unterscheiden.

10. System nach dem vorstehenden Anspruch, wobei der Körper der Kapseln aus einem Papiermaterial hergestellt ist, das eine Dicke von mindestens 100 µm, vorzugsweise von 120 µm, aufweist.

11. System nach dem vorstehenden Anspruch, wobei das Papiermaterial ein mehrschichtiges Papiermaterial ist, das eine Papierschicht umfasst, die mit mindestens einem Kunststofffilm beschichtet ist.

12. System nach, wobei die Kapsel verdichteten gerösteten und gemahlenen Kaffee umfasst.

13. System nach einem der Ansprüche 9 bis 12, wobei die Dicke des Materials der Seitenwand und der Bodenwand des Kapselkörpers gleich ist.

14. Verwendung eines Satzes unterschiedlicher Kapseln (3, 3'), wobei sich die Kapseln durch die Tiefe der Seitenwände (311) unterscheiden, in der Vorrichtung nach einem der Ansprüche 1 bis 7 oder in einer Getränkemaschine nach Anspruch 8 oder in einem System nach Anspruch 9 bis 13.

## Revendications

1. Dispositif d'extraction permettant d'extraire un ingrédient de boisson en fournissant un liquide d'extraction dans une dosette, ledit dispositif d'extraction comprenant :
- des parties amont et aval (1, 2) de logement de dosette, dans lequel la partie amont (2) de logement de dosette peut être translatée le long d'un axe longitudinal (XX') entre une position ouverte permettant d'insérer et/ou d'éjecter la dosette (3) et une position fermée permettant de former une chambre d'extraction logeant la dosette lors de l'extraction,
- la partie amont (2) définissant une cage (21) et comprenant des éléments de perçage (222) permettant de percer la paroi inférieure (313) de la dosette et des ouvertures de sortie de liquide (223),
- la partie aval (1) comprenant une plaque transversale à l'axe longitudinal (XX'), ladite plaque comprenant un agencement de perçage de plan aval (12) pour l'ouverture du couvercle (32) de la dosette,
- un porte-dosette conçu pour maintenir la dosette entre les parties amont et aval de logement de dosette lorsque ces parties sont dans la position ouverte, ledit porte-dosette étant conçu pour maintenir le couvercle (32) de la dosette devant l'agencement de perçage de plan aval (12), et
dans lequel, dans la partie amont (1) de logement de dosette, la cage (21) comprend :
- une paroi latérale (211) s'étendant entre une extrémité avant (214) ouverte et une extrémité arrière (213) le long d'un axe longitudinal de la cage, ladite paroi latérale étant translatée entre la position ouverte et la position fermée, et
- une paroi d'extrémité (22) transversale audit axe longitudinal de la cage, ladite paroi d'extrémité présentant une face avant (22a), ladite face avant supportant les éléments de perçage (222) et les ouvertures de sortie de liquide (223), dans lequel ladite paroi d'extrémité (22) est mobile longitudinalement à l'intérieur de la paroi latérale (211) de la cage de ladite partie amont de logement de dosette, et
dans lequel la paroi latérale (211) et la paroi d'extrémité (22) sont actionnées par un moteur commun (10) et un actionneur commun (8), ledit actionneur commun étant relié à la paroi latérale (211) et à la paroi d'extrémité (22) de sorte que,
le dispositif d'extraction est **caractérisé en ce que,** lorsque la partie amont (2) de logement de dosette est translatée de la position ouverte à la position fermée :
- d'abord, la paroi latérale (211) est translatée de la position ouverte à la position fermée pour former la chambre d'extraction autour de la dosette, et
- ensuite, la paroi d'extrémité (22) est déplacée à l'intérieur de la paroi latérale (211) d'une position arrière jusqu'à une position avant pour percer la paroi inférieure de la dosette.

2. Dispositif d'extraction selon la revendication précédente, dans lequel la paroi latérale (211) de la partie amont de logement de dosette est maintenue par et peut glisser entre deux feuilles latérales (4), chacune desdites feuilles latérales étant attachée à un premier axe d'extrémité transversal fixe (6b) et à un second axe frontal transversal fixe (6a), et
dans lequel l'actionneur commun comprend :
- un mécanisme à genouillère (81) comprenant deux ensembles symétriques d'une tige de poussée (811) et d'une manivelle (812), chaque manivelle étant fixée à l'axe d'extrémité transversal (6b) et chaque tige étant fixée à la paroi latérale coulissante (211) de la partie amont de logement de dosette, et
- un dispositif d'écrou (82) conçu pour être déplacé par une broche (823), et
dans lequel les parties latérales (821) du dispositif d'écrou sont conçues pour se mettre en prise et glisser dans les courbes de guidage (813) conçues dans les manivelles (812) du mécanisme à genouillère.

3. Dispositif d'extraction selon la revendication précédente, dans lequel la courbe de guidage (813) de chaque manivelle du mécanisme à genouillère comprend :
- une première partie de guidage (813a) pour permettre à la genouillère de se déplacer entre une configuration pliée et une configuration étendue, et
- une seconde partie de guidage (813b) orientée le long de l'axe longitudinal horizontal (XX'), lorsque la genouillère est en configuration étendue.

4. Dispositif d'extraction selon la revendication précédente, la face arrière (22b) de la paroi d'extrémité de la partie amont de logement de dosette est conçue pour être poussée par l'extrémité avant (824) du dispositif d'écrou pendant le déplacement du dispositif d'écrou (82) le long de la seconde partie (813b) de la courbe de guidage.

5. Dispositif d'extraction selon la revendication 3 ou 4, dans lequel la face avant (22a) de la paroi d'extrémité supporte un éjecteur de dosette (25), ledit éjecteur de dosette comprenant une tige arrière (251) s'étendant à travers la paroi d'extrémité (22), et
dans lequel ladite tige de l'éjecteur de dosette est librement mobile à travers la paroi d'extrémité (22), et
dans lequel ladite tige de l'éjecteur de dosette est conçue de manière à pouvoir interagir avec l'extrémité aval (8231) de la broche du dispositif d'écrou.

6. Dispositif d'extraction selon la revendication précédente, dans lequel la tige (251) de l'éjecteur est conçue pour être poussée par l'extrémité avant (8231) de la broche lorsque la partie amont (2) de logement de dosette est dans la position ouverte.

7. Dispositif d'extraction selon l'une quelconque des revendications précédentes, dans lequel ledit dispositif comprend un système de commande configuré pour commander l'actionnement du moteur, et dans lequel .
le système de commande est configuré pour mesurer le courant du moteur et pour détecter le perçage de la dosette en fonction d'une augmentation du courant mesuré.

8. Machine de préparation de boisson comprenant un dispositif d'extraction selon l'une quelconque des revendications 1 à 7.

9. Système comprenant un dispositif d'extraction selon l'une quelconque des revendications 1 à 7 et des dosettes de tailles différentes ou une machine de préparation de boisson selon la revendication 8 et des dosettes de tailles différentes,
dans lequel chacune desdites dosettes (3, 3') comprend :
- un corps de dosette (31), ledit corps de dosette comprenant une paroi latérale (311) et une paroi inférieure (313) définissant une chambre, et
- un couvercle supérieur (32) fermant l'ouverture supérieure du corps de dosette, et
dans lequel lesdites dosettes diffèrent par les profondeurs des parois latérales (311).

10. Système selon la revendication précédente, dans lequel le corps des dosettes est constitué d'un matériau en papier présentant une épaisseur d'au moins 100 µm, de préférence d'au moins 120 µm.

11. Système selon la revendication précédente, dans lequel le matériau en papier est un matériau en papier multicouche comprenant une couche de papier enduite d'au moins un film plastique.

12. Système selon, dans lequel la dosette comprend du café torréfié et moulu tassé.

13. Système selon l'une quelconque des revendications 9 à 12, dans lequel l'épaisseur du matériau de la paroi latérale et de la paroi inférieure du corps de dosette est la même.

14. Utilisation d'un ensemble de dosettes (3, 3') différentes, lesdites dosettes différant par les profondeurs des parois latérales (311), dans le dispositif selon l'une quelconque des revendications 1 à 7 ou une machine à boissons selon la revendication 8 ou un système selon les revendications 9 à 13.
